# EUROPÄISCHE PATENTSCHRIFT

(11) **EP 1 189 717 B1**
(45) Veröffentlichungstag und Bekanntmachung des Hinweises auf die Patenterteilung: **08.01.2003**
(21) Anmeldenummer: 00926949.9
(22) Anmeldetag: 14.04.2000
(51) Int. Cl.: B22F 3/11, B22F 7/00, F16D 65/16, F16J 1/00

(54) **KOLBEN UND VERFAHREN ZUR HERSTELLUNG EINES SOLCHEN**
PISTON AND METHOD OF PRODUCING THE SAME
PISTONS ET PROCEDES POUR PRODUIRE CES DERNIERS

(30) Priorität: 29.04.1999 DE 19919574
(43) Veröffentlichungstag der Anmeldung: 27.03.2002
(73) Patentinhaber: LUCAS INDUSTRIES PUBLIC LIMITED COMPANY, Solihull B90 4LA (GB); FRAUNHOFER-GESELLSCHAFT ZUR FÖRDERUNG DER ANGEWANDTEN FORSCHUNG E.V., 80636 München (DE)
(72) Erfinder: DREXLER, Christoph, D-56072 Koblenz (DE); ROGGENBUCK, Gerd, D-56566 Neuwied (DE); SEUSER, Ulrich, D-56566 Neuwied (DE); WEBER, Markus, D-28757 Bremen (DE); WOLLENWEBER, Karl-Heinz, D-56299 Ochtendung (DE)
(74) Vertreter: von Hellfeld, Axel, Dr. Dipl.-Phys.,
(86) Internationale Anmeldenummer: EP0003422
(87) Internationale Veröffentlichungsnummer: WO00066299

(56) Entgegenhaltungen:
- EP-A- 0 859 163
- DE-A- 4 426 627
- DE-A- 19 744 300
- DE-C- 4 124 591
- DATABASE WPI Section PQ, Week 198314, Derwent Publications Ltd., London, GB; Class Q65, AN 1983-E7071K, XP002145786 & SU 932 032 A (AUTO IND TECHN RES) 30 Mai 1982
- PATENT ABSTRACTS OF JAPAN vol. 008, no. 166 (M-314), 2. August 1984 (1984-08-02) & JP 59 062772 A (NITSUSHIN KOGYO KK), 10. April 1984 (1984-04-10)

## Beschreibung

Die Erfindung betrifft Kolben, insbesondere für hydraulisch betätigte Bremsanlagen. Ganz besonders betrifft die Erfindung sog. Betätigungskolben für hydraulisch betätigte Scheibenbremsen.

Das Bemühen der Kraftfahrzeugindustrie geht seit Jahrzehnten und in jüngster Zeit zunehmend in Richtung einer Reduzierung des Fahrzeuggewichtes. Dieses Bemühen betrifft jedes Bauteil.

Ein herkömmlicher Betätigungskolben für eine Kraftfahrzeug-Scheibenbremse besteht üblicherweise aus Stahl und hat bei einem Durchmesser von 54 mm ein Gewicht von etwa 370 g. Versucht man das Gewicht in herkömmlicher Weise dadurch zu senken, daß der Betätigungskolben aus Kunststoff oder Aluminium oder extrem dünnwandig tiefgezogenem Stahlblech hergestellt wird, so kann das Gewicht auf etwa 185 g gesenkt werden.

Aus der EP 0 304 103 ist ein typischer Kolben aus tiefgezogenem Metallblech bekannt. Um bei möglichst dünnem Blech eine hohe Formstabilität (Steifigkeit) des Kolbens zu erreichen, ist der Kolbenboden dort kuppelförmig, konkav oder konvex gestaltet. Allerdings ist auch dort eine Mindest-Blechstärke von etwa 2,5 mm erforderlich.

Aus der EP 0 230 106 A2 ist ein Betätigungskolben für eine hydraulische Bremse bekannt, der aus einem inneren steifen Kolbenkörper und einer diesen ummantelnden elastischen Abdekkung besteht. Für den Kolbenkörper wird Metall oder ein Hartkunststoff vorgeschlagen.

Aus den deutschen Patentschriften DE 40 18 360 C1 und DE 41 01 630 C2 sind allgemein Verfahren zur Herstellung poröser Metallkörper durch Aufschäumung bekannt.

Aus der WO 97/09222 sind Achsschenkel in Verbundbauweise bekannt, bei denen ein Hohlraum ausgeschäumt ist. Die Blechstärke der Blechformteile beträgt dabei etwa 3 mm.

Die DE 30 40 125 A1 beschreibt Kolben für Brennkraftmaschinen, bei denen ein getrennt gefertigter Kolbenboden mit einem Kolbenmantel verbunden wird. Ein faservertärkter Kunststoff dient zur Verstärkung.

Die EP 0 304 103 A1 beschreibt Bremskolben, bei denen ein kuppelförmiger Boden die Stabilität des Kolbens verbessert.

Auch die DE 27 48 499 A1 beschreibt einen hinsichtlich der Stabilität verbesserten Bremskolben mit einer besonderen Formung seines Bodenbereiches.

Die DE 197 05 836 A1 beschreibt eine Bremsbacke, deren Belagträger sandwich-artig aufgebaut ist mit zwei Blechplatten und Aluminiumschaum dazwischen.

In folgenden Veröffentlichungen ist die Herstellung von geschäumten Metallen als solchen näher beschrieben:
J. BANHART, J. BAUMEISTER, M. WEBER: "Herstellung u. Anwendungsmöglichkeiten v. Bauteilen aus geschäumten Metallen", DE-Z. Werkstoffe im Automobilbau 97/98, S. 34-37;
J. BANHART, J. BAUMEISTER, M. WEBER: "Metallschaum wird industrietauglich", DE-Z. Der Konstrukteur 10/94, S. 24-28;
J. BANHART, J. BAUMEISTER, M. WEBER; "Geschäumte Metalle: Vielfach einsetzbar - Herstellung vereinfacht", DE-Z. Industrie Anzeiger 37/93, S. 48,49.

Die DE 41 39 020 A1 und die DE 43 26 982 C1 beschreiben besondere Verfahren zum Herstellen von Formteilen aus Metallschaum.

Die DE 195 09 018 A1 beschreibt Verfahren zum Herstellen von leichten und steifen Verbundenteilen, wobei ein Formkörper mit einem Leichtmetallschaum verwendet wird.

Die DE 197 17 894 A1 beschreibt ein Verfahren zur Herstellung von porösen Metallkörpern, bei denen besondere Prozeßparameter eingehalten werden.

Die DE 197 44 300 A1 beschreibt Verfahren zum Herstellen von porösen Formkörpern aus Leichtmetallen, bei denen besondere Heizmittel, nämlich Induktionsspulen, vorgesehen sind.

Die DE 198 13 176 A1 schließlich beschreibt ein Verfahren zum Herstellen von Verbundwerkstoffbauteilen, bei dem in eine Metallschmelze Pulverschaum eingebracht wird.

Der Erfindung liegt die technische Aufgabe zugrunde, bei einem Kolben der eingangs genannten Art das Gewicht weiter zu senken und gleichwohl eine hinreichende Formstabilität (Steifigkeit) zu erhalten.

Erfindungsgemäß wird dieses Ziel dadurch erreicht, daß die Wandstärke des Kolbenmantels kleiner als oder gleich 2 mm ist und der Innenraum des Kolbens zumindest teilweise ausgeschäumt ist.

Ein solcher Kolben wird bevorzugt als Betätigungskolben für eine hydraulisch betätigte Bremse, insbesondere Scheibenbremse, eingesetzt.

Die Erfindung ermöglicht es, die Stärke des Kolbenmantels, insbesondere aus Stahlblech, noch weiter zu reduzieren, ohne daß die Formstabilität (Steifigkeit) des Kolbens unter das zulässige Maß sinkt. Gemäß bevorzugten Ausgestaltungen der Erfindung ist die Wandstärke des Kolbens bei Verwendung von Stahlblech kleiner als oder gleich 1,5 mm, insbesondere kleiner als oder gleich 1,0 mm; weiter insbesondere kleiner als oder gleich 0,8 mm. Das verwendete Stahlblech für den Kolbenmantel kann in bekannter Weise durch Tiefziehen, Rollen etc. geformt werden.

Bevorzugt wird als Schaum ein Metallschaum, insbesondere ein Aluminiumschaum verwendet. Insoweit wird auf den obengenannten Stand der Technik (insbesondere DE 40 18 360 C1 und DE 41 01 630 C2) zurückgegriffen.

Gemäß einer Variante des Erfindungsgedankens kann der Kolben im wesentlichen auch ohne Kolbenmantel hergestellt werden; er besteht dann im wesentlichen aus einem Schaumkörper, insbesondere aus Metallschaum.

Eine andere Variante des Erfindungsgedankens sieht vor, daß der Kolbenmantel aus einem Duromer besteht und der Innenraum des Kolbens zumindest teilweise aus einem Schaumkörper. Duromere (auch als Duroplaste bezeichnet) sind in der DIN (Deutsche Industrienorm) 77 24 definiert.

Eine besonders bevorzugte Ausgestaltung aller genannten Varianten der Erfindung sieht vor, daß das Schaummaterial im Außenbereich des Kolbens, also an der Kolbenwand und nahe derselben, eine größere Dichte hat als im Innenbereich des Kolbens. Hierdurch wird bei weiterer Gewichtsersparnis eine hohe Formstabilität (Steifigkeit) des Kolbens beibehalten.

Diesem Ziel dient auch eine weitere bevorzugte Ausgestaltung der Erfindung, wonach die Gasblasen im Schaum keine stochastische Form und Ausrichtung, sondern in einer Richtung einen größeren Durchmesser als in einer Richtung senkrecht dazu haben, also z. B. eine Ellipsoidform. Dabei werden die asymmetrischen Gasblasen so ausgerichtet, daß ihre längeren Achsen parallel zu der Hauptrichtung stehen, in der die belastende Kraft wirkt. Wirken auf den Kolben an verschiedenen Stellen unterschiedliche Kräfte aus unterschiedlichen Richtungen, werden die Längsrichtungen der anisotrop ausgerichteten Gasblasen jeweils an die Haupt-Kraftwirkrichtung angepaßt, d. h. verlaufen jeweils im wesentlichen parallel zu dieser Haupt-Krafteinwirkungsrichtung.

Eine weitere Formstabilitätserhöhung (Steifigkeit) kann dadurch erreicht werden, daß der Kolbenboden konkav gestaltet wird.

Ein erfindungsgemäßes Verfahren zum Herstellen eines Kolbens mit einem Kolbenmantel und einem Kolbenboden sieht vor, daß beim Tiefziehen ein schäumungsfähiger Körper mit dem Kolbenboden und/oder dem Kolbenmantel verpreßt wird. Dadurch ist es möglich, den schäumungsfähigen Körper bei oder nach weiteren Tiefziehschritten paßgenau sowie homogen im Kolben aufzuschäumen.

Um zu verhindern, daß eine Oxidschicht zwischen dem schäumungsfähigen Körper und dem Kolbenboden deren innige Verbindung behindert, ist gemäß einer bevorzugten Ausgestaltung der Erfindung vorgesehen, daß der schäumungsfähige Körper (die "Pille", siehe unten) mit starker Reibung eingedrückt wird, also im Sinne eines sogenannten "Reibschweißens". Eine eventuelle vorhandene Oxidschicht wird dabei weggerieben. Auch eine Preßschweißung kann vorteilhaft sein, um die genannte innige Verbindung zwischen dem schäumungsfähigen Körper und bevorzugt dem Kolbenboden und gegebenenfalls zusätzlich auch dem Kolbenmantel zu erreichen.

Die erfindungsgemäßen Schaummaterialien, also insbesondere der vorstehend genannte schäumungsfähige Körper, umfassen bevorzugt Metallpulver, insbesondere Aluminiumpulver mit darin verteiltem Treibmittel, insbesondere Titanhydridpulver.

Gemäß einer bevorzugten Ausgestaltung des vorstehend genannten Verfahrens ist vorgesehen, daß der schäumungsfähige Körper durch Wärmeeinwirkung und Formgebung unter Anpassung an und Verbindung mit Kolbenmantel und Kolbenboden aufgeschäumt wird. Es erfolgt also beim Aufschäumen eine hinreichende Verbindung mit dem Kolbenmantel aufgrund der Wärmeeinwirkung und der beim Aufschäumen entstehenden Drücke. Dabei wirkt vor allem vorteilhaft für die stabile Verbindung, daß an der Kontaktstelle zum Kolbenmantel und Kolbenboden der Luftsauerstoff weitestgehend verdrängt ist.

Die oben bereits angesprochene angestrebte innige Verbindung zwischen dem Metallschaumkörper und der Kolbenwand, insbesondere dem Kolbenboden, kann auch dadurch erreicht werden, daß bei Verwendung eines Kolbenmantels aus Stahl dieser während der Herstellung gegenüber dem Aluminiumschaumkörper überhitzt wird. Zwar hat Aluminium beim Abkühlen einen stärkeren Schrumpfeffekt, jedoch bewirkt die Überhitzung des Stahl-Mantels (d.h. der Stahlmantel wird stärker erhitzt als der Aluminium-Schaumkörper), daß beim Abkühlen der Stahlmantel stärker schrumpft und somit die innige Verbindung mit dem Metallschaumkörper erreicht wird.

Eine besonders bevorzugte Ausgestaltung der Erfindung sieht die Verwendung von nichtrostendem Stahl (Edelstahl) vor. Bisher wurde im Bremsenbau die Verwendung von Edelstahl aus Preisgründen vermieden. Durch die erfindungsgemäß mögliche geringe Wandstärke wird aber dieser Kostennachteil aufgefangen und die Verwendung von nichtrostendem Stahl möglich. Beispielsweise wurde Edelstahl nach DIN (Deutsche Industrienorm) 1.43.03 verwendet. Auch Edelstahl des Typs X 12 CrNiMoTi 18.10 hat sich bewährt.

Eine Variante des erfindungsgemäßen Verfahrens zum Herstellen eines Kolbens mit Kolbenmantel und Kolbenboden, bei dem das Verfahren ein Drücken und/oder ein Tiefziehen und/oder ein Walzen und/oder ein Rollen umfaßt, sieht vor, daß bei der Herstellung ein Blech oder eine Duromerplatte verwendet wird, das bzw. die zumindest teilweise mit einem schäumungsfähigen Material beschichtet ist, welches bei oder nach der Formung des Kolbens aufgeschäumt wird. Hierdurch wird nicht nur die Herstellung vereinfacht, sondern es kann auch sichergestellt werden, daß ein maximal möglicher Verbund zwischen aufgeschäumtem Material und Kolbenmantel bzw. Kolbenboden entsteht.

Eine besonders bevorzugte Ausgestaltung der vorstehend genannten erfindungsgemäßen Verfahren sieht vor, daß der Schäumprozeß in einer formstabilisierenden Kokille durchgeführt wird. Hierdurch wird eine präzise Form des Kolbens sichergestellt.

Eine weitere Variante des erfindungsgemäßen Verfahrens zum Herstellen eines Kolbens sieht vor, daß ein vorgefertigter Schaumkörper in einen ebenfalls vorgefertigten Kolbenmantel eingeschoben und dort befestigt wird. Der Schaumkörper ist bevorzugt aus den obengenannten Materialien geformt.

Dabei kann der vorgefertigte Schaumkörper bevorzugt mittels Preßsitz, Klebstoff, oder Schaum, insbesondere Metallschaum oder Kunststoffschaum, im Kolbenmantel und/oder am Kolbenboden befestigt werden. Es kann auch bei der Herstellung des Kolbens ein Kolbenmantel verwendet werden, der mit einem schäumungsfähigen Material beschichtet ist. Dann kann ein vorgefertigter Schaumkörper in den Hohlraum des Kolbens eingeschoben werden und bei Erhitzung schäumt die genannte Beschichtung auf und durch diese Aufschäumung wird der eingeschobene Schaumkörper innigst mit der Kolbenwandung verbunden.

Eine weitere bevorzugte Variante der Erfindung sieht vor, daß die mittlere Gaszellengröße des Schaumes in äußeren Bereichen des Kolbens kleiner ist als in inneren Bereichen. Dies gilt für alle vorstehend genannten Vorrichtungs- und Verfahrensaspekte der Erfindung. Unter der "Gaszellengröße" des Schaumes ist das Volumen der den Schaum bildenden Gaszellen zu verstehen.

Durch Drehen des Mantels um seine Symmetrieachse während der Formung des Schaumes bzw. während des Aufschäumens kann erreicht werden, daß aufgrund der Fliehkräfte in Außenbereichen des entstehenden Schaumkörpers, also insbesondere an der Außenfläche, eine erhöhte Metalldichte und auch eine geringere Porengröße entsteht. Je nach Drehzahl kann erreicht werden, daß die Außenhaut des Schaumkörpers hinreichend hydraulisch dicht wird, so daß der so gebildete Schaumkörper dann ohne besonderen Kolbenmantel aus anderem Material einsetzbar ist.

Eine weitere Variante des erfindungsgemäßen Verfahrens zum Herstellen eines Kolbens sieht vor, daß ein vorgefertigter Schaumkörper mit Druckguß umgossen wird. Das geringe Einsatzgewicht, auch als Schußgewicht bezeichnet, dies gilt insbesondere bei Einsatz von Aluminium und Magnesium, desweiteren die kurze Takt-Zykluszeit und die geringe Wärmeleitfähigkeit des Schaumkerns, ermöglichen den Einsatz dieser Technik. Dabei kann eine gute Verbindung zwischen Druckgußmantel und Schaum durch metallisches Durchmischen erreicht werden und/oder durch Aufschrumpfen beim Erstarren der Schmelze mit Formschluß in den hier zumindest teilweise offenen Poren des Schaumkörpers. Es kann auch ein temperaturbedingtes teilweises Aufschmelzen auf die Außenhaut des Metallschaumes vorgesehen sein.

Eine weitere Variante der Erfindung sieht ein Verfahren zum Herstellen eines Körpers aus Metallschaum vor, bei dem eine Mischung aus Metallpulver, insbesondere Aluminiumpulver, mit einem Treibmittel, insbesondere Titanhydridpulver, unter Einwirkung elektrischer und/oder magnetischer Felder auf einen Träger oder in eine Form gesprüht wird. Dieses Verfahren ist allgemein einsetzbar, nicht nur für die Herstellung von Kolben der hier in Rede stehenden Art. Vielmehr können damit beliebige Schaumkörper und Schaumkörper-Verstärkungen in Hohlkörpern hergestellt werden. Mit den elektrischen und/oder magnetischen Feldern kann die Bewegung der Partikel gesteuert werden. Bevorzugt wird dieses Verfahren in der Art eines abgewandelten Schleudergußprozesses durchgeführt, bei dem die Restwärme der Schmelze genutzt wird, um die Aufschäumung im Aluminium-Titanhydrid-Gemisch durchzuführen. Dabei wird eine homogene Mischung aus Aluminiumpulver und Titanhydridpulver in eine Kavität (Hohlraum) eingespritzt. Durch das Aufschäumen des Treibmittels entstehen sofort Blasen, die sich beim Auftreffen auf bereits abgelegtes Material zu einer geschlossenen Schaumstruktur zusammenfügen. Wird das Verfahren in Schleudergußtechnik ausgeführt, drückt sich die neu gebildete Schaumstruktur in die vorhandene Schleudergußmasse hinein und es ergibt sich sowohl durch Metallbindung als auch formschlüssig ein fester Verbund.

In einer weiteren Ausgestaltung dieses Verfahrens ist vorgesehen, die Mischung aus Aluminium- und Titanhydridpulver bereits in der Spritzdüse zu schäumen und den Schaum dann in die Kavität einzubringen.

Nachfolgend werden Ausführungsbeispiele der Erfindung anhand der Zeichnung näher erläutert.

Die Figuren 1 bis 15 zeigen jeweils verschiedene Ausführungsbeispiele von Kolben bzw. der Herstellung solcher.

In den Figuren 1 bis 9 sind jeweils nebeneinander drei charakteristische Verfahrensschritte schematisch dargestellt und mit den Buchstaben A, B und C unterschieden (die Buchstaben A, B und C sind nur über Figur 1 angegeben, gehören aber analog zu den nachfolgenden Figuren 2 bis 9 gleichermaßen).

Die Figuren 1A, 1B und 1C zeigen schematisch drei hier interessierende Stufen einer Kolbenformung, insbesondere durch Tiefziehen. Der fertige Kolben 10 ist in Figur 1C gezeigt.
Die Kolbenwand 12 hat im fertigen Zustand eine Stärke von etwa 0,7mm.

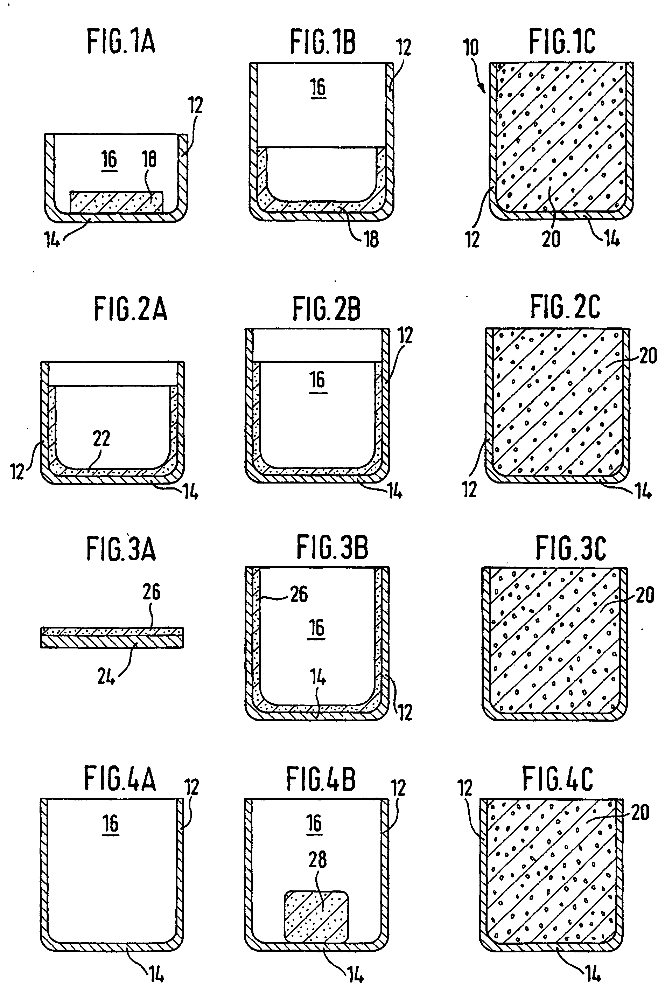

Figur 1A zeigt einen Zustand während der Kolbenfertigung mittels Tiefziehens. Der Kolben hat noch nicht seine endgültige Höhe und entsprechend ist die Wandstärke der Kolbenwand 12 noch größer als im fertigen Zustand (Figur 1C). Im Tiefziehzustand gemäß Figur 1A wird ein schäumungsfähiger Körper 18 in den Innenraum 16 des Kolbens eingelegt. Der schäumungsfähige Körper 18 besteht aus Aluminiumpulver mit homogen verteiltem Metallhydridpulver, z.B. Titanhydridpulver. Es können z. B. 0,4 Gew.% Titanhydridpulver im Pulvergemisch eingesetzt werden. Das Titanhydrid ist das Treibmittel. Der schäumungsfähige Körper 18 kann auch als "Tablette" bezeichnet werden. Seine Herstellung als solches kann dem oben genannten Stand der Technik entnommen werden.

Figur 1B zeigt einen Zustand nach weiterem Tiefziehen, wobei der schäumungsfähige Körper 18 in den entstehenden Kolben paßgenau hineingepreßt ist. Es entsteht eine verrutschfeste Verbindung infolge der Pressung und/oder metallischen Verbindung mit Kolbenwand 12 und Kolbenboden 14. Anschließend wird zumindest der schäumungsfähige Körper 18 über seinen Schmelzpunkt erwärmt, beispielsweise mittels eines ofens oder durch induktives Erhitzen, und das Metallhydrid zersetzt sich und bildet in dem Aluminium Blasen. Wird das Aluminium aufgeschäumt, bildet sich der in Figur 1C gezeigte fertige Kolben mit dem aufgeschäumten Aluminiumkörper 20.

Figur 2 zeigt eine Abwandlung des vorstehenden Ausführungsbeispiels. In allen Figuren sind einander entsprechende oder funktionsähnliche Bauteile mit gleichen Bezugszeichen versehen. Beim Ausführungsbeispiel gemäß Figur 2 wird zwischen verschiedenen Tiefziehschritten ein Töpfchen 22 aus einer gepreßten Pulvermischung aus Aluminium/Titanhydrid paßgenau in den halb fertigen Kolbenmantel 12 eingedrückt. Figur 2B zeigt den Zustand nach dem Tiefziehen bzw. Drücken und/oder Walzen und/oder Rollen, d. h. der Kolbenmantel 12 hat seine endgültige Form und Stärke erreicht, ebenso der Kolbenboden 14. Danach erfolgt das Aufschäumen des Topfes 20 aus schäumungsfähigem Material in der oben beschriebenen Weise.

Figur 3 zeigt als Ausgangsmaterial der Kolbenherstellung ein Blech 24, das mit einer Schicht 26 aus schäumungsfähigem Material beschichtet ist. Auch hier kann bevorzugt Stahlblech verwendet werden und die Schicht 26 aus schäumungsfähigem Material kann aus der vorstehend beschriebenen Pulver-Preßmasse aus Aluminium und Titanhydrid bestehen. Bei der Beschichtung des Stahlbleches 24 mit der Schicht 26 wird sichergestellt, daß überall auf der Zwischenfläche eine metallische Verbindung entsteht, so daß sich keine Oxidschicht bilden kann, die eine spätere Trennung zwischen Schaum und Kolbenwand zur Folge hätte. Das Ausgangsmaterial gemäß Figur 3A wird dann in als solches bekannter Weise durch Tiefziehen und andere Formgebungsverfahren in die Form gemäß Figur 3B gebracht und es erfolgt dann ein Aufschäumen in der oben beschriebenen Weise, so daß im Ergebnis ein Kolben gemäß Figur 3C entsteht, mit aufgeschäumtem Körper 20.

Figur 4 zeigt eine vereinfachte Abwandlung der zuvor beschriebenen Ausführungsbeispiele. Hier wird der Kolben zunächst fertig geformt (z. B. durch Tiefziehen etc.), so daß die in Figur 4A gezeigte endgültige Form der Kolbenwand 12 und des Kolbenbodens 14 entsteht. In diese Form wird eine schäumungsfähige Tablette 28 eingelegt, ohne daß eine metallische Verbindung zum Stahlblech von Kolbenboden 14 bzw. Kolbenwand 12 entsteht. Die Tablette 28 wird direkt aufgeschäumt, um den fertigen Kolben gemäß Figur 4C zu bilden.

Bei den Ausführungsbeispielen gemäß den Figuren 1 bis 4 kann ein eventuell über den oberen Rand des Kolbenmantels 12 stehender Überschuß an Schaummaterial mechanisch entfernt werden, um einen bündigen Abschluß von Kolbenwand und Schaumkörper 20 sicherzustellen.

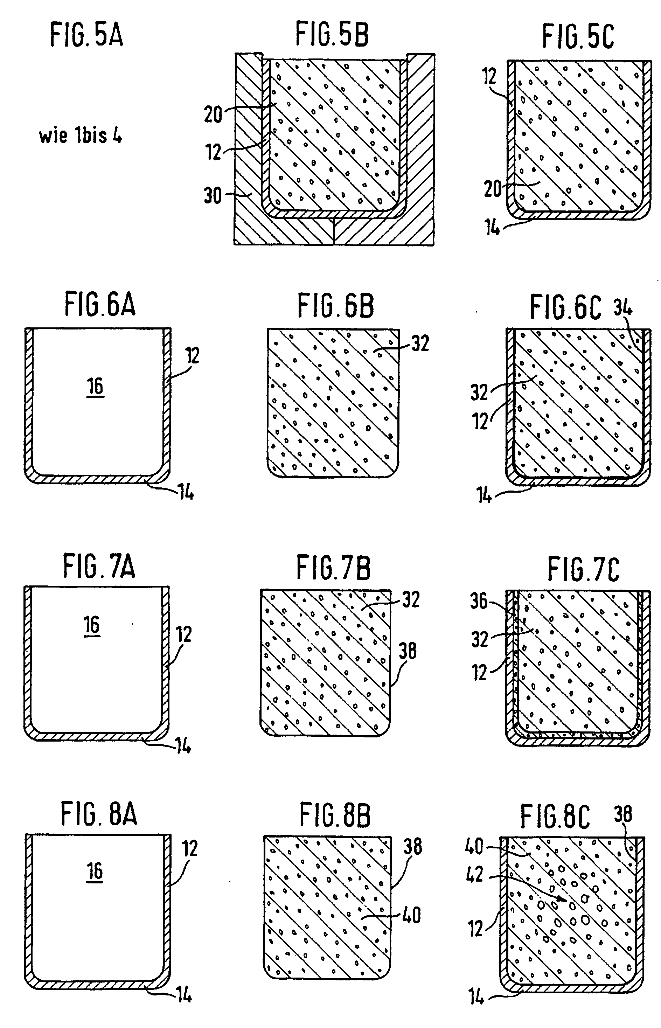

Beim Ausführungsbeispiel gemäß Figur 5 wird Aluminium als Ausgangswerkstoff für die Kolbenwand 12 und den Kolbenboden 14 verwendet. Die ersten Schritte können analog den Figuren 1 bis 4 erfolgen, d. h. Figur 5A entspricht wahlweise einer der Figuren 1A, 2A, 3A oder 4A. Der Unterschied liegt beim Schäumprozeß wegen der nahe beeinanderliegenden Temperaturen des Schmelzens des Aluminiums und des Schäumens der Pulvermischung aus Aluminium und Titanhydrid. Deshalb wird der Schäumprozeß in einer formstabilisierenden Kokille 30 durchgeführt, wodurch ein Verziehen oder sogar ein Druchbrechen des expandierenden Schaumes durch die Kolbenwand 12 oder den Kolbenboden verhindert ist. Figur 5C zeigt dann den fertigen Kolben. Es entsteht eine extrem feste metallische Verbindung des aufgeschäumten Körpers 20 mit der Kolbenwand 12 und dem Kolbenboden 14 aus Aluminium.

Figur 6 zeigt ein weiteres Ausführungsbeispiel, bei dem Kolbenmantel und Kolbenboden in bekannten Formgebungsverfahren in ihre endgültige Form gebracht, also vorgefertigt werden, und auch ein Schaumkörper 32 vorgefertigt wird. Der Kolbenmantel und Kolbenboden können z. B. aus Aluminium oder Stahlblech gefertigt sein. Die Außenhaut des vorgefertigten Schaumkörpers 32 kann eine offene Porenstruktur aufweisen.

Mittels Kunststoff 34 wird dann der vorgefertigte Schaumkörper 32 im Kolbenmantel 12 und Kolbenboden 14 verklebt.

Figur 7 zeigt ein weiteres Ausführungsbeispiel, das dem Ausführungsbeispiel gemäß Figur 6 weitgehend entspricht, jedoch dahingehend abgewandelt ist, daß die Befestigung des vorgefertigten Schaumkörpers 32 im Kolben derart erfolgt, daß die offenporige Außenhaut des Schaumkörpers 32 mittels einer besonderen Schaumschicht 36 im Kolben verklebt wird. Das Material der Schaumschicht 36 kann dem Material des Schaumkörpers 32 entsprechen oder verschieden sein, wird jedoch gesondert aufgeschäumt, so daß die feste Verbindung des Schaumkörpers 32 im Kolben entsteht.

Figur 8 zeigt eine Abwandlung des Ausführungsbeispiels gemäß Figur 7 dahingehend, daß die Schaumzellengröße im Kolben nicht homogen ist. Es wird wieder ein vorgefertigter Schaumkörper 40 verwendet, mit relativ großer Schaumzellengröße, d. h. die einzelnen Schaumblasen haben ein relativ großes Volumen. Dies kann durch das Mischungsverhältnis und weitere Schäumparameter gesteuert werden. Wird dann beim Ausführungsbeispiel gemäß; Figur 7 die äußere Schaumschicht 36 anders gemischt, nämlich so, daß sich kleinere Schaumzellengrößen ergeben, wird insgesamt ein Kolben gebildet, bei dem im Innenbereich eine größere Schaumzellengröße vorliegt als im Außenbereich.

Dies läßt sich beim Ausführungsbeispiel gemäß Figur 8 auch anders erreichen, z.B. durch eine inhomogene Mischung der Ausgangstablette und/oder eine inhomogene Steuerung der Erwärmung des schäumungsfähigen Materials beim Aufschäumen, z. B. durch gezielte Einstrahlung von erwärmender elektromagnetischer Strahlung. Somit ergibt sich ein Schaumkörper 40 im Kolben, der in seinem Innenbereich 42 größere Blasen hat als im Bereich seiner Außenwand.

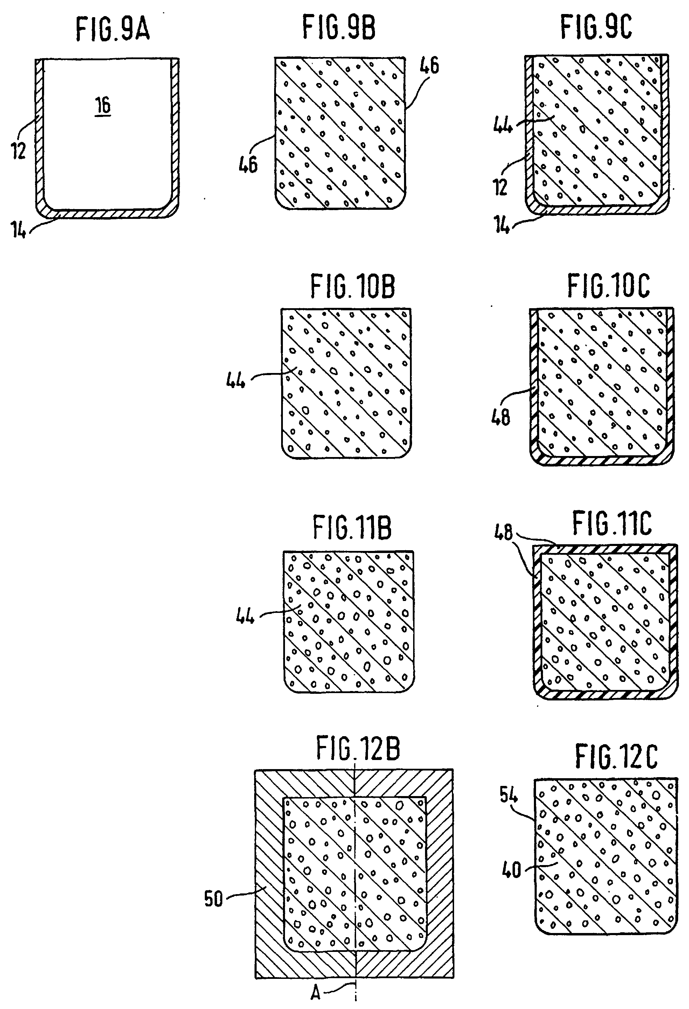

Figur 9 zeigt ein weiteres Ausführungsbeispiel, bei dem ein vorgefertigter Schaumkörper mit geschlossener Oberfläche 46 in einen vorgefertigten Kolbenmantel 12 mit Kolbenboden 14 eingepreßt wird.

Bei den vorstehenden Ausführungsbeispielen gemäß den Figuren 6 bis 9 kann der vorgefertigte Schaumkörper an seiner Oberfläche in besonderer Weise abgedichtet werden. Ist der Schaumkörper aus Metallschaum gebildet, ist es z.B. möglich, ihn in ein flüssiges Metall, wie Wismut, einzutauchen, wobei die poröse Oberfläche gut geglättet und abgedichtet wird.

Auch ein Schaumkörper aus Kunststoffschaum kann in dieser Weise durch Eintauchen (bzw. Benetzen) mit einem flüssigen Kunststoff geglättet und abgedichtet werden.

Es ist auch möglich, einen Metallschaumkörper mit Kunststoff abzudichten. So kann z.B. ein Metallschaumkörper auf Aluminiumbasis in Kunststoff eingetaucht werden bzw. mit Kunststoff benetzt werden, wobei der Kunststoff die Oberfläche glättet und abdichtet. Die mechanische Stützwirkung des Schaumkörpers wird aber weiterhin allein durch die Metallstruktur gewährleistet.

Die nachfolgenden Ausführungsbeispiele sehen bevorzugt kein Stahlblech als Material für die Kolbenwand vor, sondern andere Materialien.

Beim Ausführungsbeispiel gemäß Figur 10 wird ein vorgefertigter Schaumkörper 44 paßgenau in einen Mantel 48 aus einem Duromer eingepreßt. Der Duromer-Mantel bildet dann die Kolbenaußenhaut.

Figur 11 zeigt eine weitere Ausgestaltung dieser Variante, bei der der Schaumkörper 44 vollständig mit Duromer umspritzt ist.

Beim Ausführungsbeispiel gemäß Figur 12 wird der Metallschaum 40 derart geschäumt, daß seine Außenhaut direkt eine hydraulisch dichte und ausreichend feste Struktur hat. Dies wird dadurch gefördert, daß der Schaum während des Schäumens um eine Mittelachse A gedreht (geschleudert) wird. Hierzu wird die Form 50, in der der Aufschäumungsprozeß durchgeführt wird, um die Achse A rotiert. Hierdurch wird eine hohe Metalldichte im Außenbereich, insbesondere eine geschlossenporige Außenhaut 54 erreicht.

Figur 12C zeigt also einen fertigen, verwendbaren Kolben aus einem Schaumkörper 40.

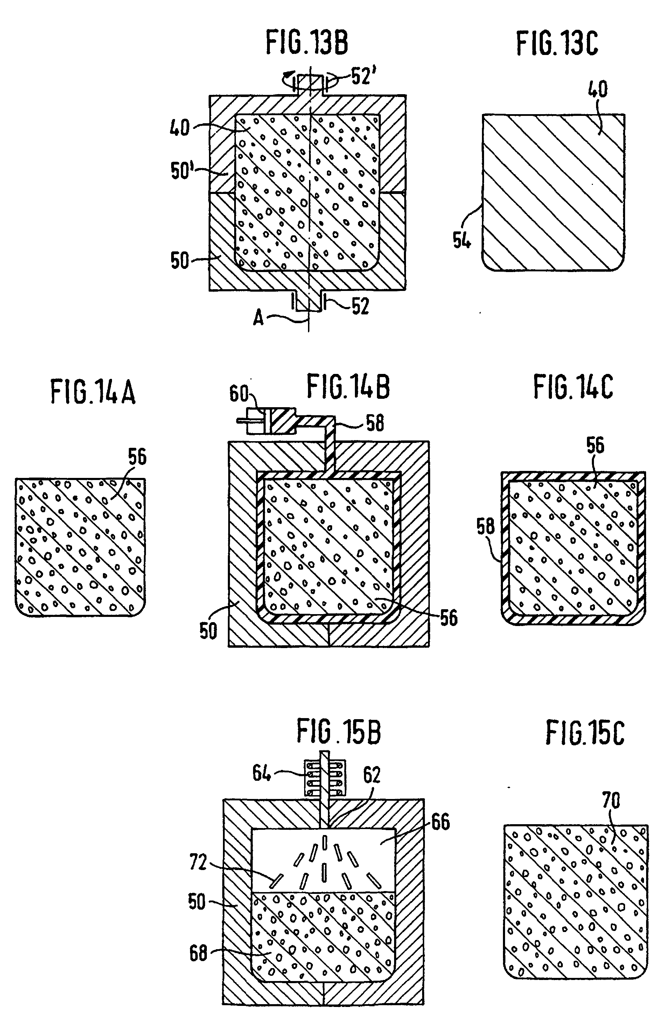

Figur 13 zeigt Einzelheiten der Form 50 aus zwei Hälften 50, 50' und mit Drehlagern 52, 52' zum Rotieren der Form um die Längsachse A.

Figur 14 zeigt ein weiteres Ausführungsbeispiel, bei dem um einen vorgefertigten Schaumkörper 56 in einer Form Druckguß 58 gegossen wird. Mit einem Kolben 60 wird das Druckgußmaterial mit der erforderlichen Temperatur in einen Spalt zwischen dem vorgefertigten Schaumkörper 56 und der Innenwand der Form 50 gepreßt. Das geringe Einsatzgewicht (insbesondere bei Verwendung von Aluminium oder Magnesium) und die kurze Taktzyklus-Zeit sowie die geringe Wärmeleitung des Schaumkernes ermöglichen den Einsatz der Druckgußtechnik. Figur 14C zeigt den fertigen Kolben mit Schaumkern 56 und Druckgußmantel 58.

Figur 15 zeigt eine Form 50, in die eine homogene Pulvermischung aus Aluminium und Titanhydrid (sog. Aluminium-Titanhydrid-Matrix) durch eine Düse 62 eingespritzt wird, also in eine Kavität 66 im Inneren der Form 50. Hierbei wird die Form gedreht. Es entstehen beim Auftreffen sofort Blasen, die sich mit der bereits gebildeten Schaumstruktur 68 verbinden. Diese Schaumstruktur drückt sich in die Schleudergußmasse hinein.

In einem weiteren Ausführungsbeispiel wird in einem Schleudergußprozeß zunächst der Kolbenmantel hergestellt. Sodann wird gemäß Figur 15 das Gemisch aus Aluminium und Titanhydrid eingespritzt. Die Restwärme des Mantels und der Kokille werden genutzt, das Gemisch zu schäumen.

Allgemein ist zur hier in Rede stehenden Pulvermischung folgendes anzumerken. Aluminiumpulver und Metallhydridpulver als lose Pulvermischung ermöglichen keine Aufschäumung, da das aus dieser Mischung der beiden Pulver freiwerdende Treibgas sofort entweichen könnte. Deshalb werden die beiden Pulver verdichtet und kompaktiert. Das so zusammengepreßte Pulver ergibt einen festen Körper. Diese Körper werden auch als "Tabletten" bezeichnet. Solche Tabletten können dann klein gemahlen werden. Es bildet sich dann wieder ein pulverartiges Gemisch. Allerdings ist dieses Pulver nicht mit dem eingangs dieses Absatzes genannten Pulver zu verwechseln, da es hinsichtlich der Aufschäumbarkeit völlig andere Eigenschaften hat. Bei der durch das Mahlen entstehenden Zerkleinerung der Tablette bleiben nämlich genügend Metallhydridteilchen von den Aluminiumteilchen umschlossen, so daß bei Wärmezufuhr die Ausdehnung des Treibgases die Aluminiumteilchen schäumt und das Treibgas somit nicht einfach verpufft. Dabei dürfen die Tabletten nicht beliebig fein zermahlen werden, um ein Verpuffen des Treibgases zu verhindern. In diesem Sinne ist hier das Wort "Pulvergemisch" zu verstehen. Dies betrifft auch kompaktierte Zustände von Aluminiumpulver und Metallhydridpulver, die mit diesem Begriff erfaßt sein sollen.

Das Verfahren gemäß Figur 15 kann dahingehend abgewandelt werden, daß im Bereich der Düse 62 bereits geheizt wird, so daß die Schaumbildung bereits in der Düse einsetzt. Dabei wird das Pulvergemisch bevorzugt in noch nicht vollständig aufgeschäumter Form in den Kolben eingebracht, wo es dann vollständig aufschäumt und seine endgültige Form erreicht.

Weiterhin zeigt Figur 15 eine Besonderheit in Form von Ablenkspulen 64 im Bereich der Düse 62, die ein elektromagnetisches Feld bis in die Kavität 66 hinein erzeugen und so eine Steuerung der Bewegung der eingespritzten Partikel, einschließlich des gebildeten Schaumes, ermöglichen. Dieses Verfahren ist allgemein einsetzbar bei der Erzeugung von Körpern oder Körperfüllungen aus Metallschaum. Es kann immer dort eingesetzt werden, wo die elektrischen/magnetischen Eigenschaften der gespritzten Teilchen 72 eine Ablenkung im elektrischen/magnetischen Feld bewirken. In Figur 15 ist die Spule 64 nur schematisch angedeutet. Wichtig ist, daß die elektrischen und/oder magnetischen Felder auf die frei durch die Kavität fliegenden Partikel 72 in gewünschter Weise einwirken, d.h. die Bewegung der Partikel beeinflussen. Auf diese Weise können komplizierte Schaumstrukturen geschaffen werden. Durch gezielte lokale Einstrahlung von erwärmender Strahlung (z.B. IR-Strahlung) in die noch fliegenden und sich gegebenenfalls schon zumindest teilweise aufschäumenden Partikel kann auch die Schaumbildung, also insbesondere die Blasengröße und -verteilung sowie Blasenorientierung, gesteuert werden.

Es hat sich auch gezeigt, daß durch elektromagnetische Felder Blasen (Poren) im Metallschaumkörper ausgerichtet (orientiert) werden können, und zwar durch Bewegung der elektromagnetischen Felder beim Erzeugen des Schaumkörpers. Wird beim in Figur 15 dargestellten Prozeß das durch eine Spule 64 erzeugte elektromagnetische Feld axial nach oben bewegt, werden die Gas-Blasen im sich bildenden Schaumkörper ebenfalls axial ausgerichtet, d.h. sie haben eine langgestreckte Form, z.B. einen Eiform, wobei die längere Achse der Blase sich verstärkt axial ausrichtet, d.h. senkrecht zum Kolbenboden steht. Dies ist im Sinne der Verbesserung der Stabilität in der kritischen Richtung erwünscht. Durch Rotation um die Längsachse können die Blasen im radialen Randbereich, d.h. nahe dem Kolbenmantel, in gewünschter Weise radial ausgerichtet werden, d.h. die längere Achse der asymmetrischen Gasblasen steht dann senkrecht zum Kolbenmantel, was ebenfalls die Stabilität des Kolbens im Bezug auf die vorherrschenden Kräfte verbessert.

Die genannten elektromagnetischen Felder dienen auch der Heizung des Materials (HF-Heizung).

Versuche zeigen, daß alle vorstehend beschriebenen Kolben bei sehr geringem Gewicht eine hohe Druckfestigkeit haben. Bei einer Wandstärke der Ausführungsbeispiele gemäß den Figuren 1 bis 4 von 0,5 mm und einer Schaumdichte von 0,7 g/cm³ traten Schädigungen erst bei einem Druck von 200 bar auf. Bei einer Wandstärke von 0,725 mm und einem konkaven Kolbenboden sowie einer Schaumdichte von 0,8 g/cm³ trat erst bei einem Druck von 310 bar eine Schädigung auf. selbige Kolben erreichen die im Bremsenbau übliche Betriebsfestigkeit von 250000 Lastwechseln mit Druckbeaufschlagungen jeweils zwischen 0 und 100 bar und bei Temperaturen zwischen -40°C und +120°C. Weitere Prüfungen zeigten positive Ergebnisse bei 275000 Lastwechseln bei 0 bis 140 bar und bei Temperaturen von +20°C bis +400°C. Ebenfalls positive Ergebnisse zeigte ein dynamischer Dauertest mit einem Bremsmoment, das einer Fahrzeugverzögerung von 10 m/sec² entsprach, sowie ein ABS-Simmulationstest und ein Rütteltest.

Die erfindungsgemäß hergestellten Brems-Betätigungskolben haben Gewichte im Bereich von 110 g.

Weiterhin von Vorteil sind die verminderte Wärmeleitfähigkeit sowie die Geräuschdämpfungseigenschaften der erfindungsgemäß hergestellten Kolben.

Auf ein aufwendiges Verchromen kann verzichtet werden, was insbesondere eine geringere Umweltbelastung bedingt. Sofern die erfindungsgemäßen Kolben eine Aluminiumhaut aufweisen, kann sie in an sich bekannter Weise mit Eloxal beschichtet werden.

## Patentansprüche

1. Kolben (10), insbesondere für eine hydraulisch betätigte Bremse, mit einem Kolbenmantel (12), einem Kolbenboden (14) und einem von diesen begrenzten Innenraum (16), **dadurch gekennzeichnet, daß** die Wandstärke des Kolbenmantels (12) kleiner als oder gleich 2 mm ist und daß der Innenraum (16) zumindest teilweise ausgeschäumt ist.

2. Kolben nach Anspruch 1, **dadurch gekennzeichnet, daß** die Wandstärke kleiner als oder gleich 1,5 mm; insbesondere kleiner als oder gleich 1,0 mm; weiter insbesondere kleiner als oder gleich 0,8 mm ist.

3. Kolben nach einem der Ansprüche 1 oder 2, **dadurch gekennzeichnet, daß** der Kolbenmantel (12) aus Stahlblech besteht.

4. Kolben nach einem der vorhergehenden Ansprüche, **dadurch gekennzeichnet, daß** der Schaum ein Metallschaum, insbesondere ein Aluminiumschaum ist.

5. Kolben, insbesondere für eine hydraulisch betätigte Bremse, im wesentlichen bestehend aus einem Schaumkörper (40), insbesondere aus Metallschaum, wobei der Schaumkörper (40) auch den Kolbenmantel bildet.

6. Kolben, insbesondere für eine hydraulisch betätigte Bremse, mit einem Kolbenmantel, einem Kolbenboden und einem von diesen begrenzten Innenraum, **dadurch gekennzeichnet, daß** der Kolbenmantel (48) und der Kolbenboden (12) einstückig aus einem Duromer bestehen und der Innenraum zumindest teilweise aus einem Schaumkörper (44).

7. Kolben nach Anspruch 6,
**dadurch gekennzeichnet, daß** der Schaumkörper (44) rundum mit Duromer umspritzt ist.

8. Kolben nach einem der vorhergehenden Ansprüche, **dadurch gekennzeichnet, daß** das Schaummaterial zumindest teilweise in seinem Außenbereich eine größere Dichte hat als in seinem Innenbereich.

9. Kolben nach einem der vorhergehenden Ansprüche, **dadurch gekennzeichnet, daß** Gasblasen im Schaum zumindest zum Teil eine Ellipsoidform haben und anisotrop ausgerichtet sind.

10. Kolben nach einem der vorhergehenden Ansprüche, **dadurch gekennzeichnet, daß** der Kolbenboden konkav ist.

11. Verfahren zum Herstellen eines Kolbens, insbesondere für eine hydraulisch betätigte Bremse, mit einem Kolbenmantel (12), einem Kolbenboden (14) und einem von diesen begrenzten Innenraum (16), wobei das Verfahren ein Tiefziehen umfaßt,
**dadurch gekennzeichnet, daß** beim Tiefziehen ein schäumungsfähiger Körper (18) mit dem Kolbenboden (14) und/oder dem Kolbenmantel (12) verpreßt wird, insbesondere mit starker Reibschweißung oder Preßschweißung.

12. Verfahren nach Anspruch 11, **dadurch gekennzeichnet, daß** der schäumungsfähige Körper (18) Metallpulver, insbesondere Aluminiumpulver, mit darin verteiltem Treibmittel, insbesondere Metallhydridpulver, enthält, wobei als Metall insbesondere Titan, Zirkon, oder Magnesium vorgesehen ist.

13. Verfahren nach einem der Ansprüche 11 oder 12, **dadurch gekennzeichnet, daß** der schäumungsfähige Körper (18) durch Wärmeeinwirkung und Formgebung unter Anpassung an und Verbindung mit Kolbenmantel und Kolbenboden aufgeschäumt wird.

14. Verfahren zum Herstellen eines Kolbens, insbesondere für eine hydraulisch betätigte Bremse, mit einem Kolbenmantel (12), einem Kolbenboden (14) und einem von diesen begrenzten Innenraum (16), wobei das Verfahren ein Drücken und/oder Tiefziehen und/oder Walzen und/oder Rollen umfaßt, **dadurch gekennzeichnet, daß** bei der Herstellung ein Blech verwendet wird, das zumindest teilweise mit einem schäumungsfähigen Material beschichtet ist, welches bei oder nach der Formung des Kolbens aufgeschäumt wird.

15. Verfahren zum Herstellen eines Kolbens, insbesondere für eine hydraulisch betätigte Bremse, mit einem Kolbenmantel, einem Kolbenboden und einem von diesen begrenzten Innenraum, wobei das Verfahren ein kunststofformgebendes Verfahren, insbesondere ein Spritzgießen, umfaßt, **dadurch gekennzeichnet, daß** ein Kunststoffhalbzeug verwendet wird, das zumindest teilweise mit einem schäumungsfähigen Material beschichtet ist, welches bei oder nach der Formung des Kolbens aufgeschäumt wird.

16. Verfahren nach einem der Ansprüche 11 bis 15, **dadurch gekennzeichnet, daß** der Schäumprozeß in einer formstabilisierenden Kokille (30) durchgeführt wird.

17. Verfahren zum Herstellen eines Kolbens, insbesondere gemäß einem der Ansprüche 1 bis 10, **dadurch gekennzeichnet, daß** ein vorgefertigter Schaumkörper (32, 44) in den Kolbenmantel (12, 48) eingeschoben und dort befestigt wird.

18. Verfahren zum Herstellen eines Kolbens, insbesondere gemäß einem der Ansprüche 1 bis 10, **dadurch gekennzeichnet, daß** aufschäumbares Material teilweise aufgeschäumt in den Kolbenmantel (12, 48) eingebracht und dort endgültig aufgeschäumt wird.

19. Verfahren nach Anspruch 17, **dadurch gekennzeichnet, daß** der vorgefertigte Schaumkörper (32) mittels eines Klebstoffes (34) oder eines Schaumes (36), insbesondere Metallschaumes oder Kunststoffschaumes, befestigt wird.

20. Verfahren nach einem der Ansprüche 11 bis 19, **dadurch gekennzeichnet, daß** die Gaszellengröße des Schaumes in äußeren Bereichen des Kolbens kleiner ist als in inneren Bereichen.

21. Verfahren zum Herstellen eines Kolbens, insbesondere für eine hydraulisch betätigte Bremse, aus einem aufgeschäumten Material, **dadurch gekennzeichnet, daß** der Schaum während des Schäumens rotiert wird.

22. Verfahren zum Herstellen eines Kolbens, insbesondere für eine hydraulisch betätigte Bremse, **dadurch gekennzeichnet, daß** ein vorgefertigter Schaumkörper (56) mit Druckguß (58) umgossen wird.

23. Verfahren zum Herstellen eines Körpers aus Metallschaum, **dadurch gekennzeichnet, daß** eine Mischung aus Metallpulver, insbesondere Aluminiumpulver, und einem Treibmittel, insbesondere Metallhydridpulver, kompaktiert wird und das so kompaktierte Pulver derart zerkleinert wird, daß bei Wärmezufuhr eine Ausdehnung des Treibgases eine Aufschäumung erzeugt, und daß unter Einwirkung elektrischer und/oder magnetischer Felder die zerkleinerte Mischung aus Metallpulver und Treibmittel auf einen Träger oder in eine Form (50) gebracht wird, dies insbesondere schichtweise.

24. Verfahren nach Anspruch 23, **dadurch gekennzeichnet, daß** das Pulvergemisch in eine Hohlform (50) eingebracht wird.

25. Verfahren nach Anspruch 24, **dadurch gekennzeichnet, daß** die Hohlform (50) beim Einbringen des Pulvergemisches rotiert.

26. Verfahren zum Herstellen eines Kolbens, insbesondere für eine hydraulisch betätigte Bremse, mit einem Kolbenmantel, einem Kolbenboden und einem von diesen begrenzten Innenraum, **dadurch gekennzeichnet, daß** der Innenraum zumindest teilweise ausgeschäumt wird und daß die Restwärme einer vorgelagerten Fertigungsstufe, wie z. B. Schleuderguß, zum Schäumen von in den Innenraum eingebrachtem Material verwendet wird.

27. Verfahren nach einem der Ansprüche 11 bis 26, **dadurch gekennzeichnet, daß** die Aufschäumung unter Erwärmung mittels elektromagnetischer Strahlung durchgeführt wird, insbesondere mit Infrarotstrahlung.

28. Verfahren nach einem der Ansprüche 11 bis 26, **dadurch gekennzeichnet, daß** die Aufschäumung unter Erwärmung mittels elektromagnetischer Felder durchgeführt wird, insbesondere mittels Induktionserwärmung.

29. Verfahren nach Anspruch 27 oder 28, **dadurch gekennzeichnet, daß** die Einstrahlung elektromagnetischer Energie so gesteuert wird, daß im Schaum zumindest teilweise ellipsoidförmige Blasen entstehen.

30. Verfahren nach Anspruch 29, **dadurch gekennzeichnet, daß** die Längsachse des Ellipsoids so orientiert wird, daß sie zumindest annähernd in Richtung der Hauptkrafteinwirkung auf den Kolben verläuft.

31. Verfahren nach Anspruch 30, **dadurch gekennzeichnet, daß** die Längsachsen der Ellipsoide im Bereich des Kolbenbodens axial und im Bereich des Kolbenmantels radial verlaufen.

## Claims

1. Piston (10), in particular for a hydraulically operated brake, having a piston skirt (12), a piston head (14) and an interior (16) delimited by them, **characterized in that** the wall thickness of the piston skirt (12) is less than or equal to 2mm and that the interior (16) is at least partially packed with foam material.

2. Piston according to claim 1, **characterized in that** the wall thickness is less than or equal to 1.5mm; in particular less than or equal to 1.0mm; further in particular less than or equal to 0.8mm.

3. Piston according to one of claims 1 or 2, **characterized in that** the piston skirt (12) is made of steel sheet.

4. Piston according to one of the preceding claims, **characterized in that** the foam is a metal foam, in particular an aluminium foam.

5. Piston, in particular for a hydraulically operated brake, substantially comprising a foam body (40), in particular of metal foam, wherein the foam body (40) also forms the piston skirt.

6. Piston, in particular for a hydraulically operated brake, having a piston skirt, a piston head and an interior delimited by them, **characterized in that** the piston skirt (48) and the piston head (12) are made integrally from a duromer and the interior at least partially from a foam body (44).

7. Piston according to claim 6, **characterized in that** duromer is injection-molded around the foam body (44).

8. Piston according to one of the preceding claims, **characterized in that** the foam material at least partially has a greater density in its outer region than in its inner region.

9. Piston according to one of the preceding claims, **characterized in that** at least some gas bubbles in the foam have an ellipsoidal shape and are aligned anisotropically.

10. Piston according to one of the preceding claims, **characterized in that** the piston head is concave.

11. Method of manufacturing a piston, in particular for a hydraulically operated brake, having a piston skirt (12), a piston head (14) and an interior (16) delimited by them, wherein the method comprises a deep-drawing operation, **characterized in that** during the deep-drawing operation an expandable body (18) is molded with the piston head (14) and/or the piston skirt (12), in particular by high friction welding or pressure welding.

12. Method according to claim 11, **characterized in that** the expandable body (18) comprises metal powder, in particular aluminium powder, with propellant, particular metal hydride powder, distributed therein, wherein in particular titanium, zircon or magnesium is provided as a metal.

13. Method according to one of claims 11 or 12, **characterized in that** the expandable body (18) is expanded under the effect of heat and shaping while simultaneously being adapted and bonded to piston skirt and piston head.

14. Method of manufacturing a piston, in particular for a hydraulically operated brake, having a piston skirt (12), a piston head (14) and an interior (16) delimited by them, wherein the method comprises a pressing and/or deep-drawing and/or milling and/or rolling operation, **characterized in that** for manufacture a metal sheet is used which is at least partially coated with an expandable material which is expanded during or after shaping of the piston.

15. Method of manufacturing a piston, in particular for a hydraulically operated brake, having a piston skirt, a piston head and an interior delimited by them, wherein the method comprises a plastic molding method, in particular injection-molding, **characterized in that** a plastic semifinished product is used which is at least partially coated with an expandable material which is expanded during or after shaping of the piston.

16. Method according to one of claims 11 to 15, **characterized in that** the expansion process is effected in a dimension-stabilizing mold (30).

17. Method of manufacturing a piston, in particular according to one of claims 1 to 10, **characterized in that** a prefabricated foam body (32, 44) is inserted into the piston skirt (12, 48) and fastened there.

18. Method of manufacturing a piston, in particular according to one of claims 1 to 10, **characterized in that** expandable material is introduced in a partially expanded state into the piston skirt (12, 48), where it is completely expanded.

19. Method according to claim 17, **characterized in that** the prefabricated foam body (32) is fastened by means of an adhesive (34) or a foam (36), in particular metal foam or plastic foam.

20. Method according to one of claims 11 to 19, **characterized in that** the gas cell size of the foam is smaller in outer regions of the piston than in inner regions.

21. Method of manufacturing a piston, in particular for a hydraulically operated brake, from an expanded material, **characterized in that** the foam is rotated during expansion.

22. Method of manufacturing a piston, in particular for a hydraulically operated brake, **characterized in that** a prefabricated foam body (56) is cast round with diecasting material (58).

23. Method of manufacturing a body from metal foam, **characterized in that** a mixture of metal powder, especially aluminium powder, and a propellant, especially metal hydride powder, is compacted and the powder thus compacted is comminuted such that an expansion of the power gas generates a foaming up following the supply of heat and that under the effect of electric and/or magnetic fields the comminuted mixture of metal powder and propellant is applied, in particular layer by layer, onto a backing or into a mold (50).

24. Method according to claim 23, **characterized in that** the powder mixture is introduced into a hollow mold (50).

25. Method according to claim 24, **characterized in that** the hollow mould (50) rotates during introduction of the powder mixture.

26. Method of manufacturing a piston, in particular for a hydraulically operated brake, having a piston skirt, a piston head and an interior delimited by them, **characterized in that** the interior is at least partially packed with foam material and that the residual heat of a preceding production stage, such as e.g. centrifugal casting, is used to expand material introduced into the interior.

27. Method according to one of claims 11 to 26, **characterized in that** the expansion under the effect of heat is effected by means of electromagnetic radiation, in particular by means of infrared radiation.

28. Method according to one of claims 11 to 26, **characterized in that** the expansion under the effect of heat is effected by means of electromagnetic fields, in particular by means of induction heating.

29. Method according to claim 27 or 28, **characterized in that** the irradiation of electromagnetic energy is controlled so as to produce at least partially ellipsoidally shaped bubbles in the foam.

30. Method according to claim 29, **characterized in that** the longitudinal axis of the ellipsoid is oriented in such a way that it extends at least approximately in the direction of the main force acting upon the piston.

31. Method according to claim 30, **characterized in that** the longitudinal axes of the ellipsoids extend axially in the region of the piston head and radially in the region of the piston skirt.

## Revendications

1. Piston (10), en particulier pour un frein actionné par force hydraulique, comprenant une enveloppe de piston (12), un fond de piston (14) et un volume intérieur (16) délimité par ceux-ci, **caractérisé en ce que** l'épaisseur de paroi de l'enveloppe de piston (12) est inférieure ou égale à 2 mm et **en ce que** le volume intérieur (16) est rempli au moins en partie de mousse.

2. Piston la revendication 1, **caractérisé en ce que** l'épaisseur de paroi est inférieure ou égale à 1,5 mm; en particulier inférieure ou égale à 1,0 mm; encore plus particulièrement inférieure ou égale à 0,8 mm.

3. Piston selon la revendication 1 ou 2, **caractérisé en ce que** l'enveloppe de piston (12) est en acier.

4. Piston selon l'une quelconque des revendications précédentes, **caractérisé en ce que** la mousse est une mousse de métal, en particulier une mousse d'aluminium.

5. Piston, en particulier pour un frein actionné par force hydraulique, se composant essentiellement d'un corps de mousse (40), en particulier en mousse de métal, le corps de mousse (40) formant aussi l'enveloppe de piston.

6. Piston, en particulier pour un frein actionné par force hydraulique, comprenant une enveloppe de piston, un fond de piston et un volume intérieur délimité par ceux-ci,
**caractérisé en ce que** l'enveloppe de piston (48) et le fond de piston (12) se composent d'un duromère d'une seule pièce et **en ce que** le volume intérieur au moins en partie d'un corps de mousse (44).

7. Piston selon la revendication 6,
**caractérisé en ce que** le corps de mousse (44) est entièrement revêtu de duromère projeté.

8. Piston selon l'une quelconque des revendications précédentes, **caractérisé en ce que** le matériau de mousse a au moins en partie une densité plus grande dans sa région extérieure que dans sa région intérieure.

9. Piston selon l'une quelconque des revendications précédentes, **caractérisé en ce que** des bulles de gaz présentes dans la mousse ont au moins en partie une forme d'ellipsoïde et sont orientées de façon anisotrope.

10. Piston selon l'une quelconque des revendications précédentes, **caractérisé en ce que** le fond de piston est concave.

11. Procédé de fabrication d'un piston, en particulier pour un frein actionné par force hydraulique, comprenant une enveloppe de piston (12), un fond de piston (14) et un volume intérieur (16) délimité par ceux-ci, le procédé comprenant un emboutissage, **caractérisé en ce que** pendant l'emboutissage on presse un corps (18) pouvant mousser avec le fond de piston (14) et / ou l'enveloppe de piston (12), en particulier avec soudage fort par friction ou par pression.

12. Procédé selon la revendication 11, **caractérisé en ce que** le corps (18) pouvant mousser contient de la poudre de métal, en particulier de la poudre d'aluminium, dans laquelle est réparti un produit moussant, en particulier de la poudre d'hydrure de métal, le métal prévu étant en particulier le titane, le zirconium ou le magnésium.

13. Procédé selon l'une quelconque des revendications 11 ou 12, **caractérisé en ce qu'**on fait mousser le corps (18) pouvant mousser par effet de la chaleur et formage avec adaptation à et liaison avec l'enveloppe de piston et le fond de piston.

14. Procédé de fabrication d'un piston, en particulier pour un frein actionné par force hydraulique, comprenant une enveloppe de piston (12), un fond de piston (14) et un volume intérieur (16) délimité par ceux-ci, le procédé comprenant un pressage et / ou un emboutissage et / ou un laminage et / ou un roulage, **caractérisé en ce qu'**on utilise lors de la fabrication une tôle qui est revêtue au moins en partie d'un matériau pouvant mousser qu'on fait mousser pendant ou après le formage du piston.

15. Procédé de fabrication d'un piston, en particulier pour un frein actionné par force hydraulique, comprenant une enveloppe de piston, un fond de piston et un volume intérieur délimité par ceux-ci, le procédé comprenant un procédé de formage de matière synthétique, en particulier un moulage par injection, **caractérisé en ce qu'**on utilise un demi-produit de matière synthétique qui est revêtu au moins en partie d'un matériau pouvant mousser qu'on fait mousser pendant ou après le formage du piston.

16. Procédé selon l'une quelconque des revendications 11 à 15, **caractérisé en ce que** le procédé de moussage est mis en oeuvre dans un moule stabilisateur de forme (30).

17. Procédé de fabrication d'un piston, en particulier selon l'une quelconque des revendications 1 à 10, **caractérisé en ce qu'**un corps de mousse préfabriqué (32, 44) est introduit dans l'enveloppe de piston (12, 48) et y est fixé.

18. Procédé de fabrication d'un piston, en particulier selon l'une quelconque des revendications 1 à 10, **caractérisé en ce que** du matériau pouvant mousser qu'on a fait mousser en partie est introduit dans l'enveloppe de piston (12, 48) et **en ce qu'**on l'y fait mousser définitivement.

19. Procédé selon la revendication 17, **caractérisé en ce que** le corps de mousse (32) préfabriqué est fixé au moyen d'une colle (34) ou d'une mousse (36), en particulier d'une mousse de métal ou d'une mousse de matière synthétique.

20. Procédé selon l'une quelconque des revendications 11 à 19, **caractérisé en ce que** la taille des cellules de gaz de la mousse est plus petite dans des régions extérieures du piston que dans des régions intérieures.

21. Procédé de fabrication d'un piston, en particulier pour un frein actionné par force hydraulique, **caractérisé en ce qu'**on fait tourner la mousse pendant qu'on la fait mousser.

22. Procédé de fabrication d'un piston, en particulier pour un frein actionné par force hydraulique, en un matériau qu'on a fait mousser, **caractérisé en ce qu'**un corps de mousse (56) préfabriqué est transvasé par injection sous pression (58).

23. Procédé de fabrication d'un corps de mousse de métal,
**caractérisé en ce qu'**on compacte un mélange de poudre de métal, en particulier de poudre d'aluminium et d'un produit moussant, en particulier de poudre d'hydrure de métal et **en ce qu'**on broie la poudre ainsi compactée de telle manière que lors d'un apport de chaleur une expansion du gaz moussant engendre un moussage et que sous l'effet de champs électriques et / ou magnétiques le mélange broyé de poudre de métal et de produit moussant soit amené sur un support ou dans forme (50) et cela en particulier en couches.

24. Procédé selon la revendication 23, **caractérisé en ce que** le mélange de poudre est introduit dans une forme creuse (50).

25. Procédé selon la revendication 24, **caractérisé en ce qu'**on fait tourner la forme creuse (50) pendant l'introduction du mélange de poudre.

26. Procédé de fabrication d'un piston, en particulier pour un frein actionné par force hydraulique, comprenant une enveloppe de piston, un fond de piston et un volume intérieur délimité par ceux-ci, **caractérisé en ce qu'**on remplit le volume intérieur au moins en partie de mousse et **en ce qu'**on utilise la chaleur résiduelle d'une opération de fabrication antérieure, comme par exemple le moulage par centrifugation, pour faire mousser le matériau introduit dans le volume l'intérieur.

27. Procédé selon l'une quelconque des revendications 11 à 26, **caractérisé en ce que** le moussage est mis en oeuvre par chauffage au moyen d'un rayonnement électromagnétique, en particulier d'un rayonnement infrarouge.

28. Procédé selon l'une quelconque des revendications 11 à 26, **caractérisé en ce que** le moussage est mis en oeuvre par chauffage au moyen de champs électromagnétiques, en particulier au moyen d'un chauffage par induction.

29. Procédé selon la revendication 27 ou 28, **caractérisé en ce que** l'irradiation d'énergie électromagnétique est commandée de telle façon que des bulles au moins en partie de forme ellipsoïdale naissent dans la mousse.

30. Procédé selon la revendication 29, **caractérisé en ce que** le grand axe de l'ellipsoïde est orienté de telle façon qu'il s'étende au moins approximativement dans la direction de l'action de la force principale sur le piston.

31. Procédé selon la revendication 30, **caractérisé en ce que** les grands axes des ellipsoïdes s'étendent axialement dans la région du fond de piston et radialement dans la région de l'enveloppe de piston.
